(19) Europäisches Patentamt
European Patent Office
Office européen des brevets

(11) **EP 4 170 834 A2**

(12) **EUROPEAN PATENT APPLICATION**
published in accordance with Art. 153(4) EPC

(43) Date of publication:
26.04.2023 Bulletin 2023/17

(51) International Patent Classification (IPC):
*H01S 3/067* (2006.01)    *H01S 3/106* (2006.01)
*H01S 3/11* (2023.01)

(21) Application number: 21793993.3

(52) Cooperative Patent Classification (CPC):
H01S 3/1115; H01S 3/06791; H01S 3/1061

(22) Date of filing: 20.07.2021

(86) International application number:
PCT/IB2021/056554

(87) International publication number:
WO 2022/018637 (27.01.2022 Gazette 2022/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.07.2020 RU 2020125448

(71) Applicants:
• IRE-POLUS
Frayazino, 141190 (RU)
• IPG Photonics Corporation
Oxford, Massachusetts 01540 (US)

• IPG Laser GmbH
57299 Burbach (DE)

(72) Inventors:
• BARANOV, Andrey
Fryazino 141195 (RU)
• BYCHKOV, Ilya
Fryazino 141195 (RU)
• MIASNIKOV, Daniil
Fryazino 141195 (RU)

(74) Representative: Kobiako von Gamm, Iouri
Kobiako-von Gamm
Patent- und Rechtsanwaltskanzlei
PartG mbB
Bruckmannstraße 13
80638 München (DE)

(54) **METHOD FOR STABLE AUTOGENERATION OF ULTRA-SHORT LASER PULSES IN A POLARIZATION MAINTAINING OPTICAL FIBRE RING RESONATOR, AND LASER BASED THEREON**

(57)    The invention relates to the field of laser technology and is intended for the provision of stable generation of ultrashort laser pulses in the femto-picosecond range. The proposed method and device are implemented in a unidirectional polarizing resonator, at a given level of optical amplification in the active fibre section of an amplifier with about 2W optical diode pumping. The resonator contains a non-linear optical element (NOE). The NOE has two loops with passive thermal compensation by means of special placing together of the asymmetric sections of birefringent fibre. Both loops are thermostatically controlled. The selection and fixing (memorization in the controller) of the temperatures of these two loops, at a given level of optical amplification in the optical amplifier, further ensures the optimal ratio of the linear and non-linear parts of the phase difference between the polarization components of the optical wave at the NOE output, by which there is stable ultrashort pulsing autogeneration with self-excitation at start up each time the laser is switched on, which is the technical result. 2 primary claims, 6 sub-claims, 1 figure.

*Figure*

**Description**

Technical Field

The invention refers to methods for the autogeneration of ultrashort laser pulses and a laser device based upon, in particular to pulsed fibre lasers with passive mode locking in a polarization-maintaining ring resonator which contains a non-linear optical element (NOE).

Prior art

Ultrashort pulse lasers in the pico- and femto-range are widely used in various branches of technology to solve a variety of problems, amongst others in material processing for industrial applications and for surgical applications in medicine. Fibre lasers occupy a special place among them due to their low cost, simplicity of use and high degree of reliability. Single-mode quartz fibre light guides, in which effects related to Kerr nonlinearity take place, are often used to design pulsed ring lasers with passive mode locking.

In the patent RU2605639C1 (which is a Russian counterpart of the European patent EP3317930B1 belonging to the same applicant as the present application) a scheme of a passive mode-locked ring fibre laser based on the non-linear polarization evolution effect contains a polarization sensitive isolator, an active fibre pumped by a laser diode, and two fibre polarization controllers regulated by micro-controllers. The polarization controllers are the weak point in this scheme since their regulation range is limited and generation stability may be disrupted by both mechanical and temperature factors.

In patent US9276372B2, discrete optical elements are used in the ring resonator scheme. The scheme which is not completely fibre-based results in unnecessary optical loss when matched with the fibre-optic sections. A Faraday rotator in a non-reciprocal element (which the inventors called a "non-reciprocal phase shifter") is an additional component which Verdet constant is dependent on temperature and therefore as we know shall be thermostatically controlled. The Verdet constant depends on a wavelength, so problems with generating the broad spectra inherent in ultrashort pulses may arise.

In: Boivinet S. et al. All-Fibre 1-\(\mu\) m PM Mode-Lock Laser Delivering Picosecond Pulses at Sub-MHz Repetition Rate //IEEE Photonics Technology Letters. - 2014. - T. 26. - №. 22. - C. 2256-2259, to generate ultrashort pulses, a non-linear optical element was formed as a segment of a polarization-maintaining fibre guide (PM-fibre), into which radiation is introduced at an angle to the slow axis by a polarizer and a Faraday mirror. The imperfections of this scheme, as in the previous example, lie in the use of a Faraday rotator with all its disadvantages.

In: Wang Y. et al. Cross-splicing method for compensating fibre birefringence in polarization-maintaining fibre ring laser mode locked by nonlinear polarization evolution //Applied optics. - 2016. - T. 55. - №. 21. - C. 5766-5770, for the first time, an approach was used when the linear birefringence of one fibre-optic guide was compensated by another same PM-fibre spliced (welded) at 90 degrees to the polarization axes, without using a Faraday mirror. However, it is difficult to obtain stable generation and pulse-repetition stability in a scheme like this because of the temperature instability of the PM-fibre sections and, consequently, the phase instability of the polarization components which is also conditioned upon the inhomogeneity of the fibres both in length and in cross section.

In: Szczepanek J. et al. Ultrafast laser mode-locked using nonlinear polarization evolution in polarization maintaining fibres //Optics letters. - 2017. - T. 42. - №. 3. - C. 575-57, an approach similar to the previous one was used, but there was a third segment of PM-fibre with an offset along the splice angle. Mode locking was achieved by careful alignment of the fibre lengths; however, pulsing stability for generation with this kind of ring laser scheme was not at the level required and more work on the scheme is needed, there is no pulsed lasing stability or thermal stability.

In: I. Bychkov, A. Baranov. Simulation of ultrashort pulsed lasing in a laser based on the effect of the non-linear evolution of polarization in two sections of polarization-maintaining optical fibres //Quantum Electronics - 2019 - T.49. - №8. - C.762-767 - the closest technical solution is described and a theoretical numerical simulation of the previous case is run, but the third segment of PM-fibre selected was replaced by a model reconfigurable phase element. Areas of stable operation are established in a combined non-linear optical element consisting of two segments of polarization-maintaining fibres L1 and L2, equal in length and spliced to each other with the orthogonal orientation of the polarization axes and having a spliced joint with a fibre resonator at input and output mismatched according to the angle of orientation of the polarization axes at an acute angle of less than 40 degrees. However, in the study there is no impact of external medium/temperature parameters on the stability of the phase characteristics of the non-linear optical element which in practice result in the breakdown of pulsed lasing.

This invention puts forward a method and a device for the stable autogeneration of ultrashort laser pulses free from the above disadvantages, in particular because of temperature instability.

Disclosure of the invention

The invention puts forward a method and a device (laser) for generating ultrashort laser pulses with passive mode locking based on the well-known effect of non-linear birefringence in the polarization-maintaining fibre-optic guide - in the PM-fibre - of a ring resonator in which they form unidirectional polarized radiation. It is amplified on the active fibre section of the optical amplifier, filtered in a spectral band of several nanometres after removing part of the amplified radiation from the resonator. The presence of a non-linear optical element (NOE) at the polarizer input leads to excitation of pulsed lasing in the ring resonator in dissipative soliton mode, at which non-linear birefringence is achieved and therefore the non-linear evolution of polarization also. The NOE consists of two segments of optical fibre L1 and L2, equal in length and joined to each other by a splice with the orthogonal orientation of the polarization axes and having spliced joints with the external fibre/loop of the ring resonator at input and output mismatched according to the angle of orientation of the polarization axes at an acute angle of less than 40 degrees, while at the input of the non-linear optical element band-pass optical filtering is done and, at its output, the polarization of the output radiation along its slow polarization axis.

In contrast to well-known schematics for the construction of pulsed lasers like this, the proposed method and device for exciting autogeneration of ultrashort laser pulses differs in its increased generation stability, thermal stability, the possibility of self-excitation and transition to pulsed autogeneration mode at start-up. This is the result of the use of two thermal compensation loops by means of special placing together of the asymmetric parts of fibre segments L1 and L2, which form the NOE. Each loop is thermostatically controlled and their thermal stabilization is done by an electronic controller at two different temperatures T1 and T2, respectively. The choice of temperature for these two loops ensures the optimal ratio of the linear and non-linear parts of the phase difference between the polarization components of the optical wave at the NOE output, at which there is the required thermal stability and stability of the ultrashort pulsing autogeneration mode with self-excitation at start-up each time the laser is switched on, which is the technical result.

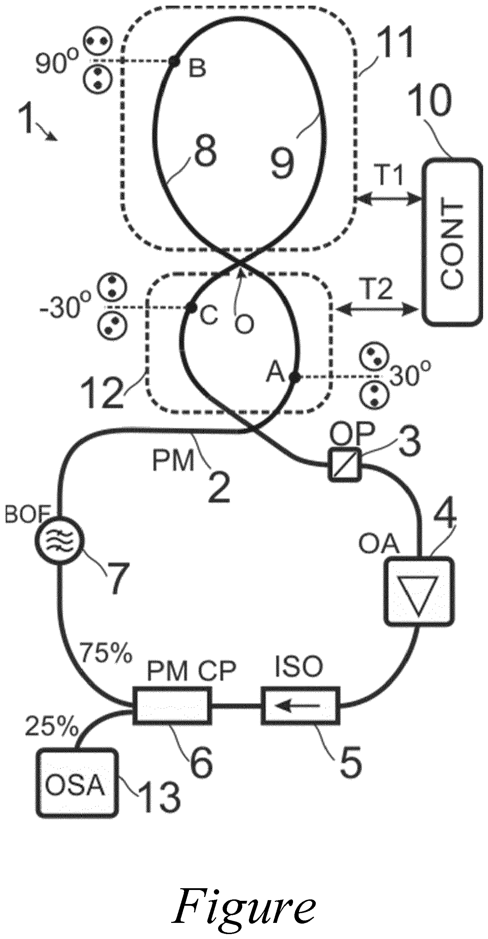

Other advantages and distinctive features of the proposed invention will become obvious from the following detailed description of its embodiment, quoted with references to the accompanying drawing and a brief description.

Brief description of drawing

Figure: block diagram of an ultrashort pulse laser with a ring resonator.

1 - optical fibre ring resonator,
2 - polarization-maintaining fibre-optic guide (PM-fibre),
3 - optical fibre polarizer (OP),
4 - optical amplifier (OA),
5 - optical isolator (ISO),
6 - PM-fibre optical coupler (PM CP),

7 - band-pass optical filter (BOF),
8 - segment AB of NOE PM-fibre (segment L1),
9 - segment BC of NOE PM-fibre (segment L2),
10 - regulation controller (CONT) based on a microcontroller,
11 - first loop of thermostat with temperature T1,
12 - second loop of thermostat with temperature T2,
13 - optical spectrum analyser (OSA) for analysing output radiation.
A - NOE input connection with resonator's PM-fibre (the angle mismatch of the polarization axes is indicated on the extended dotted line: 30°),
B - internal orthogonal connection by PM-fibre in the NOE,
C - NOE output connection with resonator's PM-fibre (the angle mismatch of the polarization axes is indicated on the extended dotted line: -30°).

Embodiment of the invention

The figure shows a block diagram of an ultrashort pulse laser with a ring resonator 1, done on PM-fibre 2, all elements are fibre in design: an optical polarizer (OP) 3, an optical amplifier (OA) 4 of the radiation power, an optical isolator (ISO) 5, PM-fibre optical coupler (PM CP) 6, band-pass optical filter (BOF) 7, spectral filter necessary to ensure the laser's operation in dissipative soliton mode. It will be recalled that in order to achieve passive mode locking the so-called non-linear optical element (NOE) must be located in the resonator. This is an element whose transmission depends on the input radiation power. More specifically, transmission must increase as the input power increases. In this scheme, the effect of non-linear polarization evolution is used to create such an element. The ring resonator contains a nonlinear optical element in the form of two segments of optical fibre AB and BC, joined at point B, of lengths L1 and L2 respectively and joined to each other by a splice with the orthogonal orientation of the polarization axes and having spliced joints with the external fibre/loop of the ring resonator at input at point **A** and at output at point **C** mismatched according to the angle of orientation of the polarization axes at an acute angle of less than 40 degrees, while at the NOE input band-pass optical filtering is carried out and, at its output, polarization of the output radiation along the light guide slow axis.

In known previous similar ring resonator schemes insufficient attention was paid to the method of placing the NOE fibre. But this factor is of decisive importance and noticeably affects the stability of the pulsed lasing mode during self-excitation of the resonator.

In optical amplifier 4, an optical fibre doped with ytterbium ions is usually used as an active medium if obtaining radiation amplification near the 1.0 $\mu$m wavelength is required. Ions of other rare-earth elements are used for amplification in other optical ranges - Er, Ho, Tm, etc.

To ensure unidirectional generation in optical scheme 1, an optical isolator 5 is used. A fibre coupler 6 is used to deliver the useful part of the power from the resonator to the consumer, as well as for analysis of spectral characteristics or to further compress the pulse and obtain ultrashort femtosecond pulses. In the invention, the NOE is formed by two pieces of PM-fibre with lengths L1 and L2, the polarizer 3 is connected to its output at point C. At the same time, optical fibre segments L1 and L2 are aligned precisely to within the beat length (about 2 mm) of the polarization-maintaining fibre-optic guide. It is known that PM-fibres have a beat length dependent on the temperature. For example, when one metre of Nufern PM980-XP fibre is heated by one degree Celsius, the phase difference change will be approximately 3.5 rad. Therefore, by varying the temperatures of the fibres, it is possible to change the phase shift $\Delta\varphi_L$ between the radiation propagating in the fast and slow axes of the PM-fibre. For example, for a 10 cm long segment, the change in the linear component of the phase difference $\Delta\varphi_L = \pi$ will already occur when heated by 10 degrees, and correspondingly with temperature instability within 0.1 degrees- the instability of the linear part of the phase difference will be $0.01\pi$ radians, or 1.8 angular degrees.

NOE transmission *Tr* with a polarizer 3 at the output, which blocks radiation along the fast axis of the fibre, is described by the claim (on condition that at input most of the linearly polarized radiation propagates along the slow axis):

$$Tr = \frac{(\sin 2\Theta)^2}{2}\,(1 - \cos(\Delta\varphi_L + \Delta\varphi_{NL}))$$

where $\Theta$ is the angle of radiation input into fibre L1; $\Delta\varphi_L$, $\Delta\varphi_{NL}$ respectively are the linear and non-linear phase shifts between the two polarization modes. $\Delta\varphi_L$ is caused by the different lengths L1 and L2 and different linear birefringence of these fibres (for example, as a result of their different temperatures). $\Delta\varphi_{NL}$ - is caused by the effects of self-phase modulation and phase cross-modulation between the two polarization modes. It is assumed that the angle between the axis of the L2 fibre and the PM-fibre to the polarizer is negative, opposite the angle in use in the NOE and is equal to: $-\Theta$. At equal $\Theta$ angles to the NOE input and output, the linear component of the phase difference will shift by $\pi$ radians. Thus, by choosing thermostat temperatures T1 and T2, it is possible to create a big loss for continuous radiation in the resonator when there is no pulse (i.e. create low transmission *Tr* right down to zero, since for continuous low power radiation $\Delta\varphi_{NL} = 0$). It will be recalled that, for self-excitation of the pulsed lasing mode, the transmission function *Tr* of the non-linear element (after the polarizer) must have a non-zero value and a non-zero positive derivative at low input powers. In this case, a small increase in the input radiation power will lead to an increase in the transmission *Tr* by means of an additional non-linear phase incursion $\Delta\varphi_{NL}$. Both the mathematical modelling and the experiments show that for the excitation of stable pulsed lasing, it is optimal to have an initial phase difference of about $\Delta\varphi_L = 0.1\pi$. In the case of the optical scheme proposed, this can easily be achieved by selecting and stabilizing the temperatures T1 and T2 of the two NOE fibre loops using two thermostats.

Thus, the invention puts forward a method and device for generating ultrashort laser pulses with passive mode locking, based on the well-known effect of non-linear birefringence in the polarization-maintaining fibre-optic guide (in the PM-fibre) of a ring resonator 1 (figure), consisting in the formation of unidirectional, by means of an optical isolator 5, polarized radiation, using an optical polarizer 3, in a ring resonator after passing through an active fibre section for optical amplification in the amplifier 4 pre-polarized radiation, with optical filtering of the pulses on a band-pass optical filter 7 after removal from the resonator of part of the amplified radiation by a fibre optical coupler 6, which leads to excitation in the ring resonator of pulsed lasing in dissipative soliton mode, in which non-linear birefringence (the non-linear evolution of polarization) is achieved in the known combined fibre non-linear optical element (NOE), consisting of two segments of optical fibre AB and BC (L1 and L2, respectively) equal in length and joined to each other by a splice with the orthogonal orientation of the polarization axes and having spliced joints with the external fibre/loop of the ring resonator at input and output mismatched according to the angle of orientation of the polarization axes at an acute angle of less than 40 degrees, while at the input of the non-linear optical element band-pass optical filtering is carried out and, at its output, polarization of the output radiation along the light guide slow axis.

The proposed method and device differ from known solutions in that self-excitation and stable autogeneration of pulsed radiation in the PM-fibre 2 ring resonator 1 are provided by optimal temperature matching and stabilization of the phase shift of the polarization components of the optical wave, its linear and non-linear phase components at the NOE output, creating in particular:

- the preliminary selection and fixing of temperatures T1 and T2 (and at later generation start-ups these selected values do not require re-selection) for the two NOE fibre loops, respectively, at which a stable mode of self-excitation and autogeneration of ultrashort pulses is ensured;
- thermostatically controlling at fixed temperatures T1 and T2 of each NOE fibre loop, including the places of their connection in the resonator at the input and output, to eliminate the drift of phase mismatch of the polarization components of optical waves along the two polarization axes of the PM-fibre at the NOE output, when one of the loops contains an orthogonally oriented connection of the unequal parts of segments L1 and L2 of the PM-fibres, and the other - the remaining parts and their external connections (NOE input and output) with the ring resonator PM-fibre and, at the same time, by choosing and fixing the temperatures of these loops a non-zero value for the linear component of phase difference $\Delta\varphi_L$ of the radiation along the two axes of polarization of the PM-fibre at the NOE output is achieved, and

by means of placing together the fibre sections of segments L1 and L2 in the two thermostatically controlled loops, additional partial temperature compensation for the inhomogeneity of birefringence and phase drift of polarization components is achieved in the equal sections of segments L1 and L2 in each loop and in the gap between the loops.

Notably, the NOE fibre input and output are spliced (welded) into the ring resonator at equal values, regardless of the sign, of the angular displacements of the polarization axes with respect to the resonator fibre in the range from 10 to 40 angular degrees, optimally at an angle of 30 angular degrees.

Notably, the phase difference of the polarization components of optical waves along the two axes of polarization at the NOE output, where there is no non-linear evolution of polarization, $\Delta\varphi_L$ is fixed by the temperature selection of the two NOE loops and lies within $15\div 25$ angular degrees, being optimally equal to 20 angular degrees.

The proposed method for autogeneration of ultrashort pulses can be done in a device such as an ultrashort pulse laser, in the housing (in the figure the presence of a housing is implied) of which is contained: an electronic controller 10 (CONT) for controlling the fibre optical amplifier 4, an optical fibre ring resonator 1 with passive mode locking on a polarization-maintaining fibre 2 (on PM-fibre), as well as the following optical elements in the resonator:

- fibre non-linear optical element (NOE), including two fibre segments L1 and L2, equal in length and connected to each other with the orthogonal orientation of the polarization axes and having connections at the input and output with the external PM-fibre/ring resonator loop, mismatched at the angle of orientation to the polarization axes;
- optical fibre polariser 3;
- optical amplifier of radiation power 4;
- isolator 5;
- optical coupler 6;
- band-pass optical filter 7.

The laser device proposed in the invention goes into self-excitation and stable autogeneration in accordance with the method described above when switched on. The device differs from known ones in that self-excitation and stable autogeneration of pulsed radiation in the ring resonator 1 of the PM-fibre 2 laser are provided by optimal temperature matching and stabilization of the phase shift of the polarization components of the optical wave, its linear and non-linear phase components at the NOE output, achieved by means of two thermostats 11 and 12, respectively, regulated by an electronic controller 10, ensuring in particular:

- preliminary selection and fixing of temperatures T1 and T2 (and at further generation start-ups these selected values do not require re-selection and are stored in the memory of the electronic controller 10) in which there are located two NOE fibre loops, respectively, for achieving stable temperature for self-excitation and autogeneration of ultrashort pulses;
- thermostatically controlling at fixed temperatures T1 and T2 of each NOE fibre loop, including the places of their connection inside and outside at the NOE input and output at thermostats 11 and 12 respectively, to eliminate the temperature drift of phase mismatch of the polarization components of optical waves along the two polarization axes of the PM-fibre at the NOE output, when one of the loops contains an orthogonally oriented connection at point B of the unequal parts of segments L1 and L2 of the PM-fibres, and the other - the remaining parts and their external connections at points A and C (NOE input and output) with the PM-fibre 2 ring resonator 1, and by selecting and fixing temperatures T1 and T1 [sic] of these loops in the thermostats a non-zero value for the linear component of phase difference $\Delta\varphi_L$ of the radiation along the two axes of polarization of the PM-fibre at the NOE output is achieved and, at the same time, by means of placing together the fibre sections of segments L1 and L2 in the two thermostatically controlled loops, additional partial temperature compensation for the inhomogeneity of birefringence and phase drift of polarization components is achieved in the equal sections of segments L1 and L2 in each loop and in the gap between the loops.

Notably, as an option, the optical fibre polarizer is located in a thermostatically controlled loop together with the NOE output connection, or in a separate third thermostat at a fixed temperature T3.

Notably, the electronic controller 10 ensures the regulation and stabilization of thermostat temperatures T1 and T2 by means of electrical instrumentation circuitry accurate to no less than 0.5 degrees Celsius.

Notably, after partial removal of the radiation to outside the resonator via the fibre coupler 6, the duration of the laser picosecond pulse can be about $5\div 15$ ps with an energy of up to 5 nJ at a repetition rate of $5\div 25$ MHz.

Notably, after removal of the radiation to outside the resonator via the fibre coupler 6, the duration of the laser picosecond pulse with a radiation spectrum broadened by $15\div 30$ nm at a central wavelength of about 1030 nm and a normal (positive) linear chirp, may be further reduced to the femtosecond range by a device with anomalous dispersion of group velocities (for example, on a pair of diffraction gratings).

Exemplary embodiment of the invention.

For the embodiment of the invention, a device was assembled according to the figure. A ring resonator optical scheme for a pulsed ytterbium laser with passive mode locking, self-excited and switching to autogeneration mode at a central wavelength of 1030 nm was made using standard optical elements and contained:

- a 1 PM-fibre 2 ring resonator: Nufern PM980-XP,
- two serial fibre polarizers, with an extinction of 20 dB,
- an ytterbium optical amplifier 4, diode pumped at a wavelength of 980 nm, with average optical diode pump power of 2W, with an active fibre length of 1.2 m.
- fibre isolator 5,
- 25% - coupler 6 for radiation delivery from the resonator,
- band-pass optical filter 7 with a passband of 6 nm at a level of -3 dB at a central wavelength of 1030 nm,
- electronic controller, assembled based on a C8051F125 micro-controller, ensuring the regulation and stabilization of thermostat temperatures by means of electrical instrumentation circuitry accurate to no less than 0.5 degrees Celsius.

Passive mode locking at start up and transition to a stable autogeneration mode was done by selecting the level of optical amplification and the temperatures: T1 and T2 of the two NOE loops, in which the asymmetry along the length of the configured fibre segments L1 and L2 was about 10 cm with a total length of 5.5 m. Temperatures T1 and T2 can differ by 15 degrees Celsius from one manufactured device to another.

The device ensured stable operation after tuning regulated by a microcontroller at the selected loop temperatures: T1 = 40°C, T2 = 45°C. The repetition rate of ultrashort pulses with a duration of about 10 ps - 13.5 MHz, with a 3.5 nJ energy per pulse at 2W pump power in an optical amplifier, the spectral width at a central wavelength of 1030 nm was about 21.6 nm. In this case, the pulse had a normal (positive) linear chirp and was additionally compressed on a pair of diffraction gratings to a value of 150 fs.

The invention can be used in the laser industry, medicine, spectroscopy, optical communication lines, as well as for solving various fundamental and applied problems. In all areas where increased requirements are imposed on stable generation of ultrashort pulses in the femtosecond range with a broad spectrum of laser radiation at a given width and power.

## Claims

1. A method for generating ultrashort laser pulses with passive mode locking, based on the non-linear birefringence effect in a polarization-maintaining fibre light guide (in a PM-fibre) of a ring resonator, comprising generation of unidirectional polarized radiation in a ring resonator after passing through an active fibre section for optical amplification of pre-polarized radiation, optical filtering of pulses after removal from the resonator of a part of the amplified radiation, which leads to excitation of pulses in the ring resonator in dissipative soliton mode, wherein non-linear birefringence (non-linear evolution of polarization) is achieved in the combined fibre non-linear optical element (NOE), consisting of two segments of optical fibre L1 and L2, equal in length and joined to each other by splicing with an orthogonal orientation of the polarization axes and having spliced joints with an external fibre/loop of the ring resonator at input and output mismatched according to the angle of polarization axes orientation at an acute angle of less than 40 degrees, wherein at the input of the non-linear optical element a band-pass optical filtering is carried out and, at its output, a polarization of the output radiation along a slow axis of the light guide is carried out,

characterized in that a self-excitation and a temperature stable autogeneration of pulsed radiation in the PM-fibre ring resonator are provided by an optimal matching and stabilization of the phase shift of the polarization components of the optical wave, its linear and non-linear phase components at the output of the non-linear optical element (NOE), creating in particular:

- preliminary selection and fixing of temperatures T1 and T2 (and these selected values do not require re-selection at later generation start-ups) for the two fibre loops of the NOE, respectively, wherein a stable mode of self-excitation and autogeneration of ultrashort pulses at a given level of optical amplification in the fibre active section, which determines energy parameters of the generated ultrashort pulse, is ensured;
- thermostatically controlling at fixed temperatures T1 and T2 of each fibre loop of the NOE, including the joints of segments L1 and L2 inside and outside at the input and output of the NOE, in order to eliminate the temperature drift of the phase mismatch of the polarization components of optical waves along the two polarization axes of the PM-fibre at the NOE output, wherein one of the loops contains an orthogonally oriented joint of unequal parts of the segments L1 and L2 of the PM-fibres, and the other loop contains remaining parts and their external connections (NOE input and output) with the PM-fibre ring resonator, wherein by selecting and fixing the temperatures of these loops a non-zero value for the linear component of the phase difference of the radiation along the two polarization axes in the PM-fibre at the NOE output is achieved and, at the same time, by means of placing together the fibre sections of segments L1 and L2 in the two thermostatically controlled loops, additional partial temperature compensation for the inhomogeneity of birefringence and phase drift of polarization components in the equal sections of segments L1 and L2 in each loop and in the gap between the loops is achieved.

2. The method in claim 2, **characterized in that** the NOE fibre input and output are spliced into the ring resonator at equal values, regardless of the sign, of the angular displacements of the polarization axes with respect to the resonator fibre in the range from 10 to 40 angular degrees, optimally at an angle of 30 angular degrees.

3. The method in claim 1, **characterized in that** the phase difference of the polarization components of the optical waves along the two axes of polarization at the NOE output, where there is no non-linear evolution of polarization, is fixed by temperature selection for the two NOE loops and lies within $15 \div 25$ angular degrees, being optimally equal to 20 angular degrees.

4. An ultrashort pulse laser in a housing containing an electronic controller for regulating the fibre optical amplifier, an optical fibre ring resonator with passive mode locking on a polarization-maintaining fibre (on PM-fibre), automatically switching to autogeneration mode according to the method in claims 1 to 6, as well as containing the following optical elements in the resonator:

   - fibre non-linear optical element (NOE), including two fibre segments L1 and L2, equal in length and connected to each other with the orthogonal orientation of the polarization axes and having connections at the input and output with the external PM-fibre/ring resonator loop, mismatched at the angle of orientation to the polarization axes;
   - optical fibre polariser;
   - fibre optical amplifier of radiation power;
   - isolator;
   - optical coupler;
   - band-pass optical filter;
   **characterized in that** self-excitation and temperature stable autogeneration of pulsed radiation in the ring resonator of the laser on the PM-fibre are provided by optimal temperature matching and stabilization of the phase shift of the polarization components of the optical wave, its linear and non-linear phase components at the NOE output, achieved by using two thermostats regulated by an electronic controller, in particular ensuring:

   - preliminary selection and fixing of thermostat temperatures T1 and T2 (and at later generation start-ups these selected values do not require re-selection and are stored in the memory of the electronic controller), in which two NOE fibre loops, respectively, for achieving stable temperature for self-excitation and autogeneration of ultrashort pulses at a given level of optical amplification in the optical fibre amplifier, which determines the energy parameters of the ultrashort pulse generated;
   - thermostating at fixed temperatures T1 and T2 of each NOE fibre loop, including the places of their connection inside and outside at the NOE input and output, in the corresponding thermostat, to eliminate the temperature drift of the phase mismatch of the polarization components of the optical waves along the two polarization axes of the PM-fibre at the NOE output, when one of the loops contains an orthogonally oriented connection of the unequal parts of segments L1 and L2 of the PM-fibres, and the other - the remaining parts and their external connections (NOE input and output) with the PM-fibre ring resonator, and by selecting and fixing temperatures T1 and T2 of these loops in the thermostats a non-zero value for the linear component of the phase difference of the radiation along the two axes of polarization of the PM-fibre at the NOE output is achieved and, at the same time, by means of placing together the fibre sections of segments L1 and L2 in the two thermostatically controlled loops, partial temperature compensation for the inhomogeneity of birefringence and phase drift of polarization components in the equal sections of segments L1 and L2 in each loop and in the gap between the loops is achieved.

5. Ultrashort pulse laser according to claim 4, **characterized in that** the optical fibre polarizer is located in a thermostatically controlled loop together with the NOE output connection, or in a separate third thermostat at a fixed temperature T3.

6. Ultrashort pulse laser according to claims 4 and 5, **characterized in that** the electronic controller ensures the regulation and stabilization of thermostat temperatures by means of electrical instrumentation circuitry accurate to no less than 0.5 degrees Celsius.

7. Ultrashort pulse laser according to claim 4, **characterized in that** after partial removal of the radiation to outside the resonator via the fibre coupler, the duration of the laser picosecond pulse can be about 5÷15 ps with an energy of up to 5 nJ at a repetition rate of 5÷25 MHz.

8. Ultrashort pulse laser according to claim 4, **characterized in that** after removal of the radiation to outside the resonator via the fibre coupler, the duration of the laser picosecond pulse with a radiation spectrum broadened by 15÷30 nm with a central wavelength of about 1030 nm and a normal (positive) linear chirp, may be further reduced to the femtosecond range by a device with anomalous dispersion of group velocities (for example, on a pair of diffraction gratings).

*Figure*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2605639 C1
- EP 3317930 B1

- US 9276372 B2

### Non-patent literature cited in the description

- **BOIVINET S. et al.** All-Fibre 1-\(\mu\) m PM Mode-Lock Laser Delivering Picosecond Pulses at Sub-MHz Repetition Rate. *IEEE Photonics Technology Letters,* 2014
- **WANG Y et al.** Cross-splicing method for compensating fibre birefringence in polarization-maintaining fibre ring laser mode locked by nonlinear polarization evolution. *Applied optics,* 2016

- **SZCZEPANEK J. et al.** Ultrafast laser mode-locked using nonlinear polarization evolution in polarization maintaining fibres. *Optics letters,* 2017
- **I. BYCHKOV ; A. BARANOV.** Simulation of ultrashort pulsed lasing in a laser based on the effect of the non-linear evolution of polarization in two sections of polarization-maintaining optical fibres. *Quantum Electronics,* 2019